# EUROPEAN PATENT APPLICATION

(11) **EP 4 764 662 A1**
(43) Date of publication of application: **24.06.2026**
(21) Application number: 25224999.0
(22) Date of filing: 18.12.2025
(51) Int. Cl.: G02B 27/01, G02B 27/09

(54) **IMAGE GENERATING DEVICE AND HEAD-UP DISPLAY DEVICE**

(30) Priority: 19.12.2024 CN 202411878710
(71) Applicant: Coretronic Corporation, Hsin-Chu 300 (TW)
(72) Inventor: YEH, Shang-Yu, 300 Hsin-Chu (TW); LIN, Shih-Yi, 300 Hsin-Chu (TW)
(74) Representative: Ter Meer Steinmeister & Partner

(57) **Abstract**

A head-up display device and an image generating device thereof are provided. The image generating device includes a light source module, a lighting element and a light modulation module. The light source module respectively provides a first color light beam and a second color light beam at different time periods. The lighting element homogenizes the first color light beam and the second color light beam to form a first color illumination beam and a second color illumination beam, which are transmitted to the light modulation module. The light modulation module includes a plurality of pixel units arranged in an array, and is separated from the lighting element by a first separation distance. Each of the pixel units may be in an on-state or an off-state, and receive the first color illumination beam and the second color illumination beam at different time periods to be converted into an image beam.

## Description

This application claims priority of China application serial no. 202411878710.4, filed on December 19, 2024.

### BACKGROUND

### Technical Field

The disclosure relates to an image generating device and a head-up display device.

### Description of Related Art

The existing head-up displays are often used in transportation vehicles or outdoor scenes such as airplanes, land vehicles, and retail store windows. The main function is to present image information to users by superimposing on the surrounding environment. The image generating device of the head-up display includes, for example, a liquid crystal display panel. The liquid crystal display panel includes a color filter layer, a light-transmitting substrate, a thin film transistor layer, and a polarizing layer arranged adjacent to each other. The aperture ratio of the liquid crystal display panel is low, resulting in a high absorption rate of the image generating device for sunlight incident from the outside into the head-up display and difficulty in heat dissipation, which easily leads to the risk of overheating. In addition, the optical efficiency is also low, resulting in the need of high-power light source devices, which is not conducive to energy saving.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

An image generating device and a head-up display with high optical efficiency are provided in the disclosure.

The other objectives and advantages of the disclosure may be further understood from the descriptive features disclosed in the disclosure.

The object is solved by the features of the independent claims. Preferred embodiments are given in the dependent claims.

In order to achieve one of, or portions of, or all of the above objectives or other objectives, an image generating device according to an embodiment of the disclosure is configured to generate an image beam and includes at least one light source module, a lighting element, and light modulation module. The light source module is configured to respectively provide a first color light beam and a second color light beam at different time periods. The lighting element is disposed on a transmission path of the first color light beam and the second color light beam, homogenizes the first color light beam to form a first color illumination beam, homogenizes the second color light beam to form a second color illumination beam, and transmits the first color illumination beam and the second color illumination beam to the light modulation module. The light modulation module is separated from the lighting element by a first separation distance, and the light modulation module includes multiple pixel units arranged in an array. The pixel units receive the first color illumination beam and the second color illumination beam, and each of the pixel units may be in an on-state or an off-state. The pixel units convert the first color illumination beam or the second color illumination beam into the image beam.

In the following optional features are provided which might be combined with the above mentioned aspect alone, in combination or sub-combination.

In one or more embodiments, the first color light beam may comprise a plurality of first color sub-light beams, and the second color light beam may comprise a plurality of second color sub-light beams.

In one or more embodiments, he lighting element may comprise a light incident surface and a light exit surface opposite to the light incident surface.

In one or more embodiments, the light incident surface may comprise a plurality of sub-regions.

In one or more embodiments, the image generating device may comprise a plurality of light converging elements disposed between the at least one light source module and the lighting element.

In one or more embodiments, the light converging elements may receive the first color sub-light beams and the second color sub-light beams from the at least one light source module.

In one or more embodiments, each of the first color sub-light beams or each of the second color sub-light beams may be transmitted to one of the sub-regions of the light incident surface of the lighting element by the light converging elements.

In one or more embodiments, the first color sub-light beams may be incident from the sub-regions of the light incident surface and emitted from the light exit surface to form the first color illumination beam, the second color sub-light beams may be incident from the sub-regions of the light incident surface and emitted from the light exit surface to form the second color illumination beam.

In one or more embodiments, the light incident surface of the lighting element may be separated from the light converging elements by a second separation distance.

**In** one or more embodiments, the first separation distance may be defined by the distance between the light exit surface of the lighting element and the light modulation module.

**In** one or more embodiments, each of the at least one light source module may comprise a substrate and a plurality of light-emitting units disposed on the substrate.

**In** one or more embodiments, the each of the light-emitting units may comprise at least one first color light-emitting element and at least one second color light-emitting element.

**In** one or more embodiments, the at least one first color light-emitting element of the light-emitting units may be configured to provide the first color light beam, the at least one second color light-emitting element of the light-emitting units may be configured to provide the second color light beam.

**In** one or more embodiments, each of the at least one light source module may comprise a plurality of packages.

**In** one or more embodiments, each of the light-emitting units may be disposed in one of the packages, the at least one first color light-emitting element and the at least one second color light-emitting element have a fixed position in the package.

**In** one or more embodiments, the substrate may have an array reference axis parallel to a substrate surface.

**In** one or more embodiments, the packages may be arranged on the substrate surface along the array reference axis.

**In** one or more embodiments, the packages may have at least one of a distance periodic variation or a rotation angle periodic variation relative to the array reference axis.

In one or more embodiments, the at least one light source module may comprise a first light source module configured to provide the first color light beam along a first direction; and a second light source module configured to provide the second color light beam along a second direction, wherein the first direction is different from the second direction.

**In** one or more embodiments, the image generating device may comprise a light source combining element disposed on the transmission path of the first color light beam and the second color light beam, configured to transmit the first color light beam and the second color light beam to the lighting element.

**In** one or more embodiments, the at least one light source module may provide the first color light beam in a first time period, may provide the second color light beam in a second time period, and may provide the third color light beam in a third time period.

**In** one or more embodiments, the at least one light source module may comprise a first light source module configured to provide the first color light beam along a first direction; a second light source module configured to provide the second color light beam along a second direction; and a third light source module configured to provide the third color light beam along the second direction; wherein the first direction is different from the second direction.

**In** one or more embodiments, the image generating device may comprise a light source combining element disposed on a transmission path of the first color light beam, a transmission path of the second color light beam, and a transmission path of the third color light beam, and may be configured to transmit the first color light beam, the second color light beam, and the third color light beam to the lighting element.

**In** one or more embodiments, the light modulation module may comprise a liquid crystal display.

**In** one or more embodiments, an aperture ratio of each of the pixel units of the liquid crystal display may be greater than or equal to 50% and less than or equal to 80%.

**In** one or more embodiments, the light converging elements may comprise at least one of a lens element, a prism, and a light cup.

**In** one or more embodiments, the lighting element may comprise at least one of an optical film and a lens array element.

**In** one or more embodiments, the lighting element may be the lens array element, comprising a plurality of lens units arranged in an array.

In one or more embodiments, each of the sub-regions may comprise at least two lens units.

**In** one or more embodiments, at least two of the first color sub-light beams among the first color sub-light beams and at least two of the second color sub-light beams among the second color sub-light beams may correspond to one of the light converging elements.

**In** one or more embodiments, one of the first color sub-light beams among the first color sub-light beams and one of the second color sub-light beams among the second color sub-light beams may correspond to one of the light converging elements.

In another aspect a head-up display is provided, comprising the image generating device as described above.

In one or more embodiments, the image generating device may project the image beam to a projection surface to form a virtual image.

In one or more embodiments, the projection surface may be a windshield or a combiner.

A head-up display according to an embodiment of the disclosure includes an image generating device, in which the image generating device projects an image beam to a projection surface to form a virtual image.

Based on the above, the image generating device and the head-up display according to the embodiments of the disclosure have at least one of the following advantages: (1) the light source module directly provides the first color light beam and the second color light beam, therefore it is not necessary to dispose a color filter in the light modulation module in the image generating device to reduce the absorption rate of sunlight by the light modulation module and avoid overheating; (2) high optical efficiency, in which the same brightness effect may be achieved with a lower power light source module, and the heat dissipation efficiency and service life of the system may be improved; (3) the light modulation module converts the first color light beam and the second color light beam into an image beam at different time points, therefore, the control circuit of each pixel unit of the light modulation module may be simplified, thereby reducing the cost of the light modulation module.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

FIG. 1 shows a schematic diagram of a head-up display of some embodiments of the disclosure.
FIG. 2A shows a schematic diagram of an image generating device of a first embodiment of the disclosure.
FIG. 2B shows a schematic diagram of a light-emitting unit of the first embodiment of the disclosure.
FIG. 2C shows a schematic diagram of a light source module of the first embodiment of the disclosure.
FIG. 2D shows a schematic diagram of the light emission time period of multiple light-emitting elements of the first embodiment of the disclosure.
FIG. 2E shows a schematic diagram of a light modulation module of the first embodiment of the disclosure.
FIG. 2F shows a schematic diagram of a pixel unit according to the first embodiment of the disclosure.
FIG. 2G shows a schematic diagram of a side surface of the optical film of the image generating device of the first embodiment of the disclosure.
FIG. 3 shows a schematic diagram of a pixel unit according to a comparative example.
FIG. 4 shows a schematic diagram of a light source module of a second embodiment of the disclosure.
FIG. 5A to FIG. 5L respectively show a planar schematic diagram of a distance variation period or an angle variation period in the arrangement of the light-emitting units.
FIG. 6A shows a partial structural schematic diagram of an image generating device of a third embodiment of the disclosure.
FIG. 6B shows a partial structural schematic diagram of an image generating device of a fourth embodiment of the disclosure.
FIG. 6C shows a partial structural schematic diagram of an image generating device of a fifth embodiment of the disclosure.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the disclosure may be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

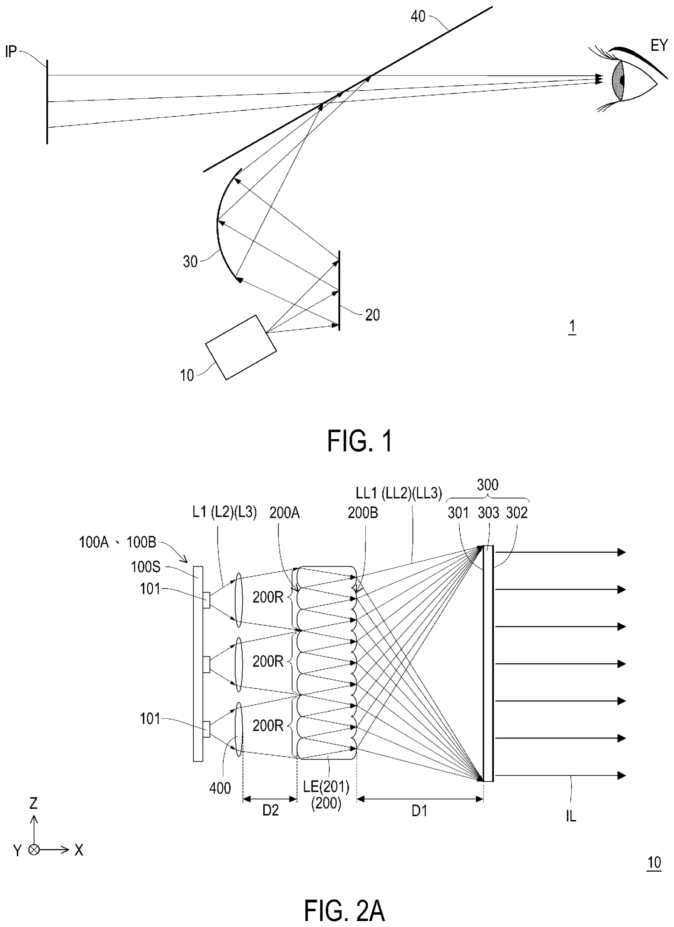

Referring to FIG. 1, FIG. 1 shows a schematic diagram of a head-up display according to some embodiments of the disclosure.

The head-up display 1 includes an image generating device 10, a first optical path bending lens group 20, and a second optical path bending lens group 30.

The image generating device 10 is suitable for generating the image beam IL. The first optical path bending lens group 20 and the second optical path bending lens group 30 are disposed on the transmission path of the image beam IL from the image generating device 10 to transmit the image beam IL out of the head-up display 1 and projecting it to the projection surface 40. The projection surface 40 may be a surface of a windshield of transportation vehicles, an optical combiner, or the like. The image beam IL is incident obliquely upon the projection surface 40. After being reflected by the projection surface 40, the image beam IL enters the eye EY of the user, so that the user may see the virtual image IP generated by the image beam IL.

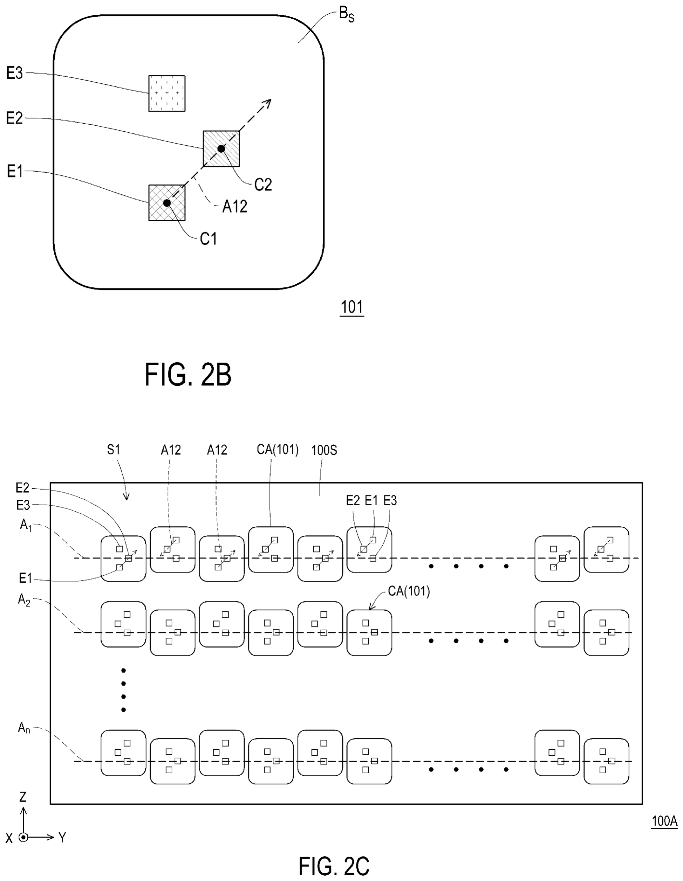

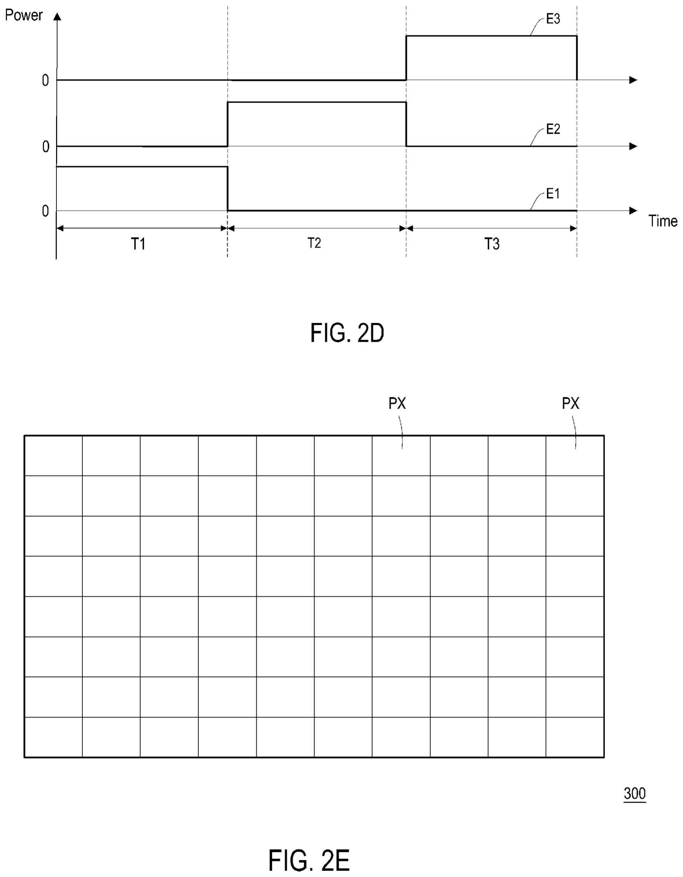

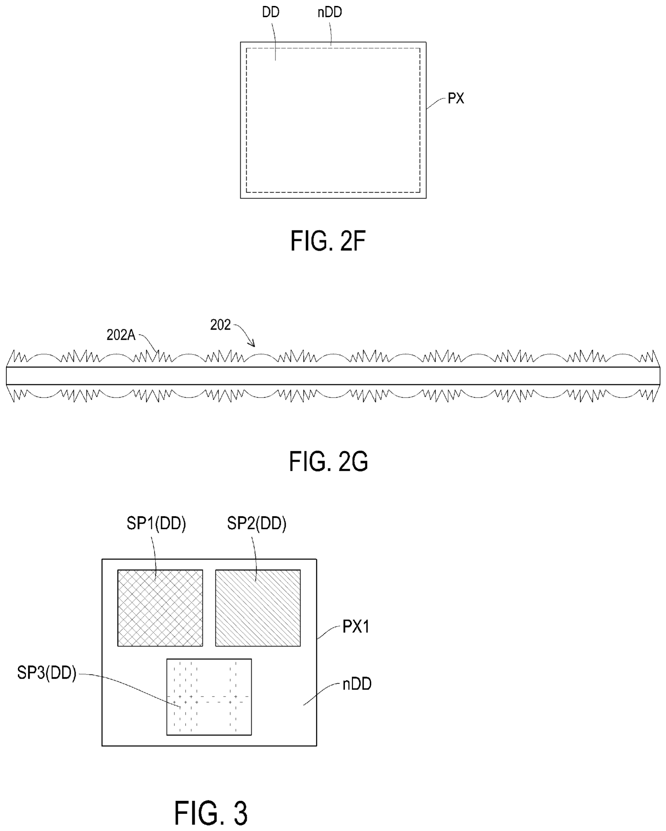

Referring to FIG. 1, FIG. 2A to FIG. 2F, FIG. 2A shows a schematic diagram of an image generating device according to a first embodiment of the disclosure, FIG. 2B shows a schematic diagram of a light-emitting unit according to the first embodiment of the disclosure, FIG. 2C shows a schematic diagram of a light source module according to the first embodiment of the disclosure, FIG. 2D shows a schematic diagram of the light emission time period of multiple light-emitting elements according to the first embodiment of the disclosure, FIG. 2E shows a schematic diagram of a light modulation module according to the first embodiment of the disclosure, FIG. 2F shows a schematic diagram of a pixel unit according to the first embodiment of the disclosure.

Referring to FIG. 2A, in the first embodiment, the image generating device 10 in FIG. 1 includes a light source module 100A, a lighting element 200, and a light modulation module 300.

Referring to FIG. 2A, FIG. 2B and FIG. 2C, the light source module 100A includes a substrate 100S and at least one light-emitting unit 101. The substrate 100S may be a circuit substrate, and the light source module 100A is configured to respectively provide the first color light beam L1 and the second color light beam L2 at different time periods. The following description will take the light source module 100A as an example that includes multiple light-emitting units 101 and may be configured to respectively provide the first color light beam L1, the second color light beam L2, and the third color light beam L3 at different time periods. Each light-emitting unit 101 includes a base Bs and a first color light-emitting element E1, a second color light-emitting element E2 and a third color light-emitting element E3 disposed on the base Bs. Each first color light-emitting element E1 is configured to provide a first color light beam L1, and the first color light beam L1 includes multiple first color sub-light beams provided by each first color light-emitting element E1 in the light-emitting units 101. Each second color light-emitting element E2 is configured to provide a second color light beam L2, and the second color light beam L2 includes multiple second color sub-light beams provided by each second color light-emitting element E2 in the light-emitting units 101. Each third color light-emitting element E3 is configured to provide a third color light beam L3, and the third color light beam L3 includes multiple third color sub-light beams provided by each third color light-emitting element E3 in the light-emitting units 101. In some embodiments, the first color light-emitting element E1, the second color light-emitting element E2, and the third color light-emitting element E3 may include light-emitting diodes or laser diodes, accordingly, the image generating device 10 may have good color saturation. It should also be noted that the light source module 100A of this embodiment is not limited to the above structure. In some embodiments, the above-mentioned light-emitting units 101 may be respectively disposed on different circuit substrates.

It should be noted that in this specification, each light-emitting unit 101 includes a first color light-emitting element E1, a second color light-emitting element E2, and a third color light-emitting element E3, but the disclosure is not limited thereto. Each light-emitting unit 101 may only include a first color light-emitting element E1 and a second color light-emitting element E2, or further include more light-emitting elements of different colors, to achieve all the technical effects of the disclosure according to the same technical solution.

Referring to FIG. 2B, the first color light-emitting element E1, the second color light-emitting element E2, and the third color light-emitting element E3 of the light-emitting unit 101 are disposed on the base Bs and formed in the same package. The package has a first reference position C1 and a second reference position C2. The first reference position C1 and the second reference position C2 are, for example, located on the base Bs. The direction starting from the first reference position C1 and passing through the second reference position C2 is the reference direction A12. The first color light-emitting element E1 of each light-emitting unit 101 is disposed at the first reference position C1. The second color light-emitting element E2 of each light-emitting unit 101 is disposed at the second reference position C2. The third color light-emitting element E3 of each light-emitting unit 101 has a fixed position relative to the first reference position C1 and the second reference position C2.

Referring to FIG. 2A and FIG. 2C, the substrate 100S has array reference axes Aₙ parallel to the substrate surface S1, where n=1, 2, 3...N, and N is any positive integer. If N is greater than 1, the array reference axes Aₙ are parallel to each other and arranged along the Z direction. The substrate surface S1 is, for example, parallel to the YZ plane. M light-emitting units 101 are arranged along each array reference axis Aₙ on the substrate surface S1, where M is any positive integer.

The arrangement of the light-emitting units 101 on the substrate 100S has at least one of a distance periodic variation or an angle periodic variation relative to the array reference axis Aₙ. Specifically, as shown in FIG. 2C, the distance periodic variation, for example, refers to the vertical distance variation between the first reference position C1 of the light-emitting units 101 disposed along one of the array reference axes Aₙ and an array reference axis Aₙ. The angle periodic variation, for example, refers to the angle variation between the reference direction A12 of the light-emitting units 101 along one of the array reference axes Aₙ and an array reference axis Aₙ. Taking the example shown in FIG. 2C, the angle periodic variation is based on every two light-emitting units 101 as a period. Alternatively, as shown in FIG. 2C, the light-emitting units 101 may also have distance periodic variation relative to the array reference axis Aₙ. That is, the light-emitting units 101 are at different distances relative to the array reference axis Aₙ and are misaligned with each other. Taking the example shown in FIG. 2C, the above distance periodic variation is based on every two light-emitting units 101 as a period. Accordingly, the first color light-emitting elements E1, the second color light-emitting elements E2, and the third color light-emitting elements E3 may be uniformly distributed on the substrate 100S. It should be noted that the number of the light-emitting units 101 in each variation period of the angle periodic variation or the distance periodic variation is not limited to two.

Referring to FIG. 2A, FIG. 2C and FIG. 2D, the first color light-emitting elements E1, the second color light-emitting elements E2, and the third color light-emitting elements E3 in the light source module 100A emit light in different time periods within a time period, so that the light source module 100A may provide light beams of different colors at different time periods. A complete time period includes the first time period T1, the second time period T2, and the third time period T3. In the first time period T1, the first color light-emitting elements E1 are turned on and provide the first color light beam L1, and the second color light-emitting elements E2 and the third color light-emitting elements E3 are turned off. In the second time period T2, the second color light-emitting elements E2 are turned on and provide the second color light beam L2, and the first color light-emitting elements E1 and the third color light-emitting elements E3 are turned off. In the third time period T3, the third color light-emitting elements E3 are turned on and provide the third color light beam L3, and the second color light-emitting elements E2 and the first color light-emitting elements E1 are turned off.

Referring to FIG. 2A, the lighting element 200 is disposed on the transmission path of the first color light beam L1, the second color light beam L2, and the third color light beam L3. The lighting element 200 includes a light incident surface 200A and a light exit surface 200B opposite to the light incident surface 200A. The light incident surface 200A includes multiple sub-regions 200R. Taking the first time period T1 as an example, the first color light beam L1 enters the lighting element 200 through the sub-regions 200R of the light incident surface 200A. That is, the first color sub-light beams are incident on the sub-regions 200R respectively, and each first color sub-light beam corresponds to each sub-region 200R. The first color sub-light beams incident from each sub-region 200R are homogenized by the lighting element 200 and then emitted from the light exit surface 200B, thereby forming a homogenized first color illumination beam LL1 on the light exit surface 200B of the lighting element 200. Similarly, the second color illumination beam LL2 and the third color illumination beam LL3 which are transmitted to the light modulation module 300 are respectively formed in the second time period T2 and the third time period T3 respectively form.

Referring to FIG. 2A, FIG. 2E and FIG. 2F, the light modulation module 300 includes multiple pixel units PX arranged in an array. Each pixel unit PX includes a display area DD and a non-display area nDD. The pixel units PX may be in an on-state or an off-state at different time periods, and different pixel units PX may be turned on or off at different time periods.

When a pixel unit PX is in the on-state, the pixel unit PX may allow the first color illumination beam LL1, the second color illumination beam LL2, or the third color illumination beam LL3 incident on the pixel unit PX to pass through and form at least a portion of the image beam IL. For example, when at least a portion of the pixel units PX in the light modulation module 300 are turned on at the first time period T1, the first color illumination beam LL1 may be converted into the image beam IL. When at least a portion of the pixel units PX in the light modulation module 300 are in the on-state at the second time period T2, the second color illumination beam LL2 may be converted into the image beam IL. When at least a portion of the pixel units PX in the light modulation module 300 are in the on-state at the third time period T3, the third color illumination beam LL3 may be converted into the image beam IL. The light modulation module 300 controls the turning on or off of each pixel unit PX according to the image signal it receives to generate the corresponding image beam IL.

In some embodiments, the first color light beam L1, the second color light beam L2, and the third color light beam L3 are respectively a blue light beam, a red light beam, and a green light beam. The first color illumination beam LL1, the second color illumination beam LL2, and the third color illumination beam LL3 are respectively a blue illumination beam, a red illumination beam, and a green illumination beam.

Therefore, when at least a portion of the pixel units PX are in the on-state at the first time period T1 and are in the off-state at the second time period T2 and the third time period T3, the image beam IL provided by at least a portion of the pixel units PX in a complete time period is a blue image beam IL. If at least a portion of the pixel units PX are in the on-state at the second time period T2 and are in the off-state at the first time period T1 and the third time period T3, the image beam IL provided by at least a portion of the pixel units PX in a complete time period is a red image beam IL. If at least a portion of the pixel units PX are in the on-state at the third time period T3 and are in the off-state at the second time period T2 and the first time period T1, a portion of the image beam IL provided by at least a portion of the pixel units PX in a complete time period is a portion of the green image beam IL.

Furthermore, if at least a portion of the pixel units PX are in the on-state at the first time period T1 and the second time period T2, and are in the off-state at the third time period T3, the image beams IL provided by at least a portion of the pixel units PX in a complete time period are respectively the blue image beam IL and the red image beam IL. The eyes EY of the user see a mixed color image of the blue image beam IL and the red image beam IL due to the persistence of vision. If at least a portion of the pixel units PX are in the on-state at the second time period T2 and the third time period T3, and are in the off-state at the first time period T1, the image beams IL provided by at least a portion of the pixel units PX in a complete time period are respectively the red image beam IL and the green image beam IL. The eyes EY of the user see a mixed color image of the red image beam IL and the green image beam IL due to the persistence of vision. If at least a portion of the pixel units PX are in the on-state at the first time period T1 and the third time period T3, and are in the off-state at the second time period T2, the image beams IL provided by at least a portion of the pixel units PX in a complete time period are respectively the blue image beam IL and the green image beam IL. The eyes EY of the user see a mixed color image of the blue image beam IL and the green image beam IL due to the persistence of vision.

If at least a portion of the pixel units PX are in the on-state at the first time period T1, the second time period T2, and the third time period T3, the image beams IL provided by at least a portion of the pixel units PX in a complete time period are respectively the blue image beam IL, the red image beam IL, and the green image beam IL. The eyes EY of the user see a mixed color image of the blue image beam IL, the red image beam IL, and the green image beam IL due to the persistence of vision. If at least a portion of the pixel units PX are in the off-state at the first time period T1, the second time period T2, and the third time period T3, the at least a portion of the pixel units PX do not provide the image beam IL to the eyes EY of the user within a complete time period.

By turning on or off the pixel units PX in the light modulation module 300 at different time periods, the image information of the image beam IL may be transmitted to the user.

In some embodiments, the light modulation module 300 may include a liquid crystal display, which may be either a "passive matrix" or an "active matrix" liquid crystal display. The liquid crystal display includes a first polarizing layer 301, a second polarizing layer 302, a liquid crystal layer 303, and a controller (not shown). The absorption axis of the first polarizing layer 301 is perpendicular to the absorption axis of the second polarizing layer 302, and the liquid crystal layer 303 is located between the first polarizing layer 301 and the second polarizing layer 302. The pixel units PX divide the liquid crystal layer 303 into multiple sub-regions, and each pixel unit PX includes one of the sub-regions. The controller controls the optical axis direction of the liquid crystal molecules of the liquid crystal layer 303 in each display area DD through the circuits and/or thin film transistors disposed in the non-display area nDD of each pixel unit PX to realize the switching between the on-state and the off-state of each pixel unit PX.

Furthermore, by controlling the optical axis direction of the liquid crystal molecules of the liquid crystal layer 303, the intensity of the blue image beam IL, the red image beam IL, and the green image beam IL in each time period may also be controlled. A virtual image IP with various colors is generated through the persistence of vision of the user.

Therefore, it should be particularly noted that the liquid crystal display of the image generating device 10 provided according to the first embodiment of the disclosure does not have a color filter layer.

Referring to FIG. 3, FIG. 3 shows a schematic diagram of a pixel unit of the light modulation module according to the comparative example.

In the comparative example shown in FIG. 3, the image generating device of the head-up display includes a liquid crystal display panel. The liquid crystal display panel includes multiple pixel units PX1. Each pixel unit PX1 includes a display area DD and a non-display area nDD. A first sub-pixel SP1, a second sub-pixel SP2 and a third sub-pixel SP3 are disposed in the display area DD, and the optical axis direction of the liquid crystal molecules in the display area DD is controlled by a thin film transistor disposed in the non-display area nDD of each pixel unit PX1. The difference between this comparative example and the disclosure is that the liquid crystal display of the comparative example includes a color filter layer, and the first sub-pixel SP1, the second sub-pixel SP2 and the third sub-pixel SP3 respectively correspond to color filter layers of different colors. The color composition of the image beam provided by the image generating device is determined by respectively controlling the on-state or off-state of each sub-pixel in each pixel unit PX1.

Since the first sub-pixel SP1, the second sub-pixel SP2 and the third sub-pixel SP3 of this comparative example require control by different thin film transistors respectively, and each sub-pixel requires different control signals and circuits, this results in a larger non-display region nDD for each pixel unit PX1 as well as increased complexity in control signals and circuits.

In contrast, referring to FIG. 2F of the present disclosure, the pixel unit PX according to the present disclosure obtains images with various colors for human eyes by superimposing different colored lights in different time periods according to persistence of vision. It is not necessary to dispose multiple sub-pixels corresponding to different colors in each pixel unit PX. Since each pixel unit PX only requires one corresponding set of control signals and circuits, the number and complexity of the control circuits are effectively reduced. Therefore, the area ratio of the non-display area nDD used for disposing the circuit in the liquid crystal display may be greatly reduced. Each pixel unit PX may have a higher aperture ratio, thereby reducing brightness loss and thus improving overall optical efficiency. The same output brightness may be achieved with a lower power light source module (e.g., a smaller number of light-emitting units 101). According to some embodiments of the disclosure, the aperture ratio (light-transmitting area/total pixel area) (area of the display area DD/(area of the display area DD + area of the non-display area nDD)) of each pixel unit PX of the liquid crystal display of the light modulation module 300 falls within the range of 50% to 80%. Under the same resolution, the aperture ratio of each pixel unit PX of the liquid crystal display of the disclosure may be increased by at least 10% compared with each pixel unit PX1 of the comparative example.

Referring to FIG. 2A, in the first embodiment of the disclosure, the lighting element 200 includes a lens array element 201. The lens array element 201 includes multiple lens units LE arranged in an array, and each sub-region 200R of the lighting element 200 includes at least two lens units LE.

However, the lighting element 200 of the disclosure is not limited to the above-mentioned lens array element 201. In some embodiments, the lighting element 200 may include an optical film, such as a geometric optical film.

Referring to FIG. 2G, FIG. 2G shows a double-sided optical film 202 among the geometric optical films. In addition, the geometric optical film may also be a single-sided film or a two-layer single-sided film. The double-sided optical film 202 is a thin film optical element having multiple arc surface microstructures 202A within a certain thickness range on two opposite surfaces. Each of the arc surface microstructures 202A is, for example, a structure that protrudes in a direction away from the corresponding surface, which enables the double-sided optical film 202 to provide a light homogenization function similar to that of the microlens array element 201, thereby allowing the image generating device to have a thinner thickness.

Referring to FIG. 2A, in some embodiments of the disclosure, the image generating device 10 may further include multiple light converging elements 400. The light converging elements 400 are disposed between the light source module 100A and the lighting element 200. A first separation distance D1 greater than 0 is between the light exit surface 200B of the lighting element 200 and the light modulation module 300, and a second separation distance D2 is between the light incident surface 200A of the lighting element 200 and the light converging elements 400. In the embodiment of FIG. 2A, the light source module 100A, the light converging element 400, the lighting element 200 and the light modulation module 300, are for example, sequentially disposed along the X axis. The first separation distance D1 is, for example, the distance between the light exit surface 200B of the lighting element 200 and the light modulation module 300 on the X axis. The second separation distance D2 is, for example, the distance between the light incident surface 200A of the lighting element 200 and the light converging element 400 on the X-axis. The light converging elements 400 converge the first color light beam L1, the second color light beam L2 or the third color light beam L3 from the light source module 100A to the sub-regions 200R of the light incident surface 200A of the light modulation module 300. In the first time period T1, each first color sub-light beam passes through one of the light converging elements 400 and is transmitted to one of the sub-regions 200R of the lighting element 200. In the second time period T2, each second color sub-light beam passes through one of the light converging elements 400 and is transmitted to one of the sub-regions 200R of the lighting element 200. In the third time period T3, each third color sub-light beam passes through one of the light converging elements 400 and is transmitted to one of the sub-regions 200R of the lighting element 200. One light converging element 400 may correspond to one or more first color sub-light beams, second color sub-light beams and third color sub-light beams.

In the example of FIG. 2A, the light converging element 400 includes a lens, but the disclosure is not limited thereto. In some embodiments, the light converging element 400 may include a lens element, a prism, and a light cup.

Based on the first separation distance D1 between the lighting element 200 and the light modulation module 300 and the second separation distance D2 between the lighting element 200 and the light converging elements 400, the heat energy generated by individual components or accumulated by absorbing sunlight is not readily transferred to each other or accumulated, thereby effectively reducing the risk of the light modulation module 300 being overheated.

In order to fully illustrate the various embodiments of the disclosure, other embodiments of the disclosure are described below. It is to be noted that the following embodiments use the reference numerals and a part of the contents of the above embodiments, and the same reference numerals are used to denote the same or similar elements, and the description of the same technical contents is omitted. For the description of the omitted part, reference may be made to the above embodiments, and details are not described in the following embodiments.

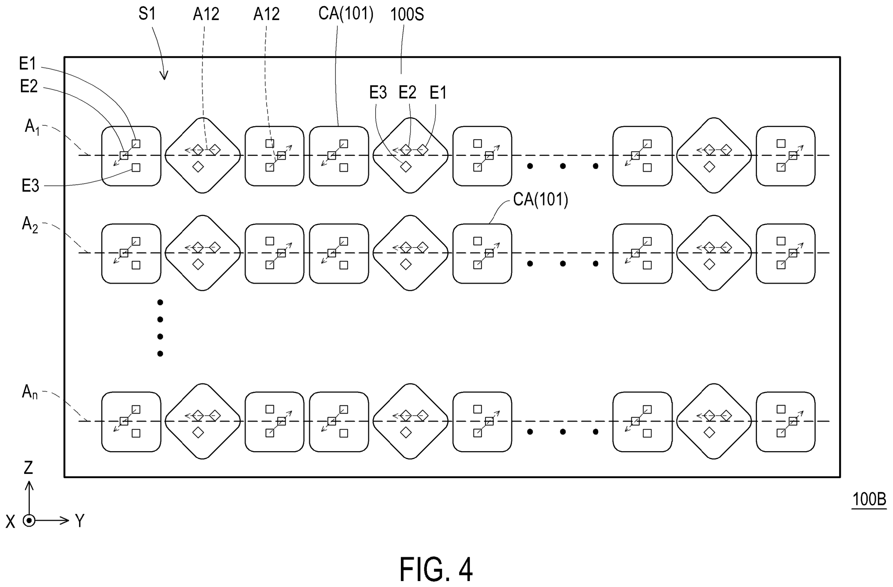

Referring to FIG. 4, FIG. 4 shows a schematic diagram of a light source module according to a second embodiment of the disclosure.

As shown in FIG. 4, the light source module 100B includes a substrate 100S and multiple light-emitting units 101. The substrate 100S has array reference axes Aₙ parallel to the substrate surface S1, where n=1, 2, 3...N, and N is any positive integer. The array reference axes Aₙ are parallel to each other and arranged along the Z direction. M light-emitting units 101 are arranged along each array reference axis Aₙ on the substrate surface S1, where M is any positive integer.

As shown in the multiple reference directions A12 in FIG. 4, the arrangement of the light-emitting units 101 has a distance periodic variation and an angle periodic variation relative to the array reference axis Aₙ, and the above-mentioned distance periodic variation and angle periodic variation are based on every three light-emitting units 101 as a period. Accordingly, the first color light-emitting elements E1, the second color light-emitting elements E2, and the third color light-emitting elements E3 may be uniformly distributed on the substrate 100S, improving the consistency of intensity distribution of the first color illumination beam LL1, the second color illumination beam LL2, and the third color illumination beam LL3 incident on the light modulation module 300.

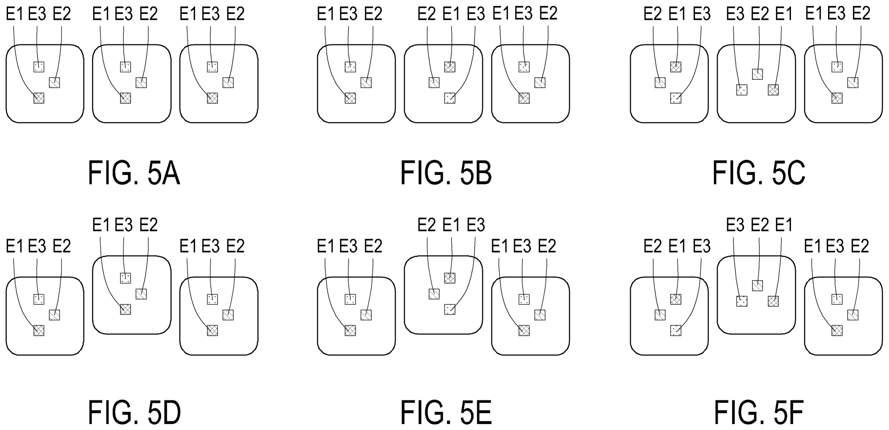

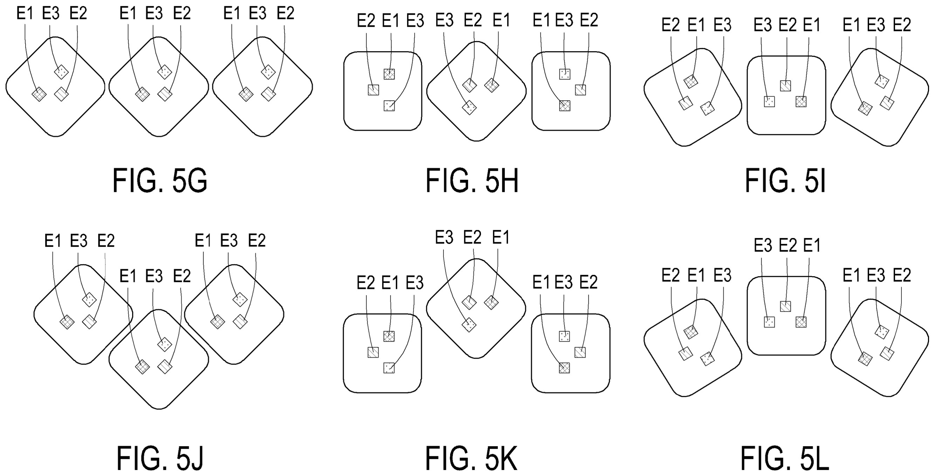

The distance periodic variation and the angle periodic variation of the light-emitting unit 101 relative to the array reference axis Aₙ are not limited to those shown in FIG. 2B and FIG. 4. Referring to FIG. 5A to FIG. 5L, FIG. 5A to FIG. 5L are planar schematic diagrams respectively taking the light-emitting unit 101 during a distance periodic variation or an angle periodic variation as an example. The light-emitting unit 101 may also be arranged in various other different distance periodic variations and angle periodic variations.

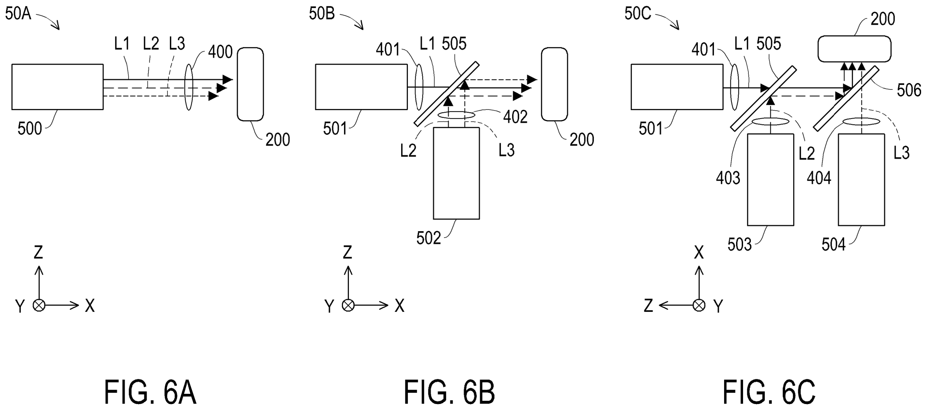

Referring to FIG. 2D and FIG. 6A, FIG. 6A shows a partial structural schematic diagram of an image generating device according to a third embodiment of the disclosure.

The image generating device 50A of the third embodiment includes a light source module 500. The light source module 500 has the same structure as the light source module 100A of the first embodiment and the light source module 100B of the second embodiment. The light source module 500 includes at least one first color light-emitting element E1, at least one second color light-emitting element E2, and at least one third color light-emitting element E3. The light source module 500 is configured to provide a first color light beam L1 including at least one first color sub-light beam toward the X direction in the first time period T1, provide a second color light beam L2 including at least one second color sub-light beam toward the X direction in the second time period T2, and provide a third color light beam L3 including at least one third color sub-light beam toward the X direction in a third time period T3. The light source module 500 in this disclosure may include at least one light-emitting unit 101 as described above, that is, having at least one first color light-emitting element E1, at least one second color light-emitting element E2, and at least one third color light-emitting element E3 in the same package.

Referring to FIG. 2D and FIG. 6B, FIG. 6B shows a partial structural schematic diagram of an image generating device according to a fourth embodiment of the disclosure.

The at least one light source module of the image generating device 50B of the fourth embodiment includes a first light source module 501 and a second light source module 502. The image generating device 50B further includes a light source combining element 505. The light source module 501 includes at least one first color light-emitting element E1, and is configured to provide a first color light beam L1 including at least one first color sub-light beam toward the X direction at a first time period T1. The light source module 502 includes at least one second color light-emitting element E2 and at least one third color light-emitting element E3, which is configured to provide a second color light beam L2 including at least one second color sub-light beam toward the Z direction at the second time period T2, and provide a third color light beam L3 including at least one third color sub-light beam toward the Z direction at a third time period T3. The light source combining element 505 is disposed on the paths of the first color light beam L1, the second color light beam L2, and the third color light beam L3 to transmit these light beams to the lighting element 200, for example, by changing the transmission direction of the second color light beam L2 and the third color light beam L3.

In addition, the image generating device 50B of the fourth embodiment further includes a light converging element 401 and a light converging element 402. The light converging element 401 is disposed between the light source module 501 and the light source combining element 505, and the light converging element 402 is disposed between the second light source module 502 and the light source combining element 505. It should be noted that, similar to the first embodiment, the number of the light converging element 401 and the light converging element 402 may be multiple. To simplify the drawing, only one is shown as an example in FIG. 6B. In this embodiment, a light converging element 401 may be disposed for the first color light beam L1, and a light converging element 402 may be disposed for the second color light beam L2 and the third color light beam L3. For example, the light converging elements may, for example, be coated with films adapted to different wavelength ranges, thereby enhancing the light transmission efficiency and uniformity for sub-light beams of different colors.

Referring to FIG. 2D and FIG. 6C, FIG. 6C shows a partial structural schematic diagram of an image generating device according to a fifth embodiment of the disclosure.

At least one light source module of the image generating device 50C of the fifth embodiment includes a light source module 501, a light source module 503, and a light source module 504. The image generating device 50C further includes a light source combining element 505 and a light source combining element 506. The light source module 501 includes at least one first color light-emitting element E1, which provides a first color light beam L1 including at least one first color sub-light beam toward the -Z direction in the first time period T1. The light source module 503 includes at least one second color light-emitting element E2, and provides a second color light beam L2 including at least one second color sub-light beam toward the X direction in the second time period T2. The light source module 504 includes at least one third color light-emitting element E3, and provides a third color light beam L3 including at least one third color sub-light beam toward the X direction in the third time period T3. The light source combining element 505 is disposed on the path of the first color light beam L1 and the second color light beam L2 to transmit these light beams to the light source combining element 506. The light source combining element 506 is disposed on the path of the first color light beam L1, the second color light beam L2 and the third color light beam L3 to transmit these light beams to the lighting element 200.

In addition, the image generating device 50B of the fifth embodiment further includes a light converging element 401, a light converging element 403, and a light converging element 404. The light converging element 401 is disposed between the first light source module 501 and the light source combining element 505, the light converging element 403 is disposed between the third light source module 503 and the light source combining element 505, and the light converging element 404 is disposed between the fourth light source module 504 and the light source combining element 506. It should be noted that, similar to the first embodiment, the number of the light converging element 401, the light converging element 403, and the light converging element 404 may be multiple. To simplify the drawing, only one is shown as an example in FIG. 6C. In this embodiment, a light converging element 401 may be disposed for the first color light beam L1, a light converging element 403 may be disposed for the second color light beam L2, and a light converging element 404 may be disposed for the third color light beam L3. For example, the light converging elements may, for example, be coated with films adapted to different wavelength ranges, thereby enhancing the light transmission efficiency and uniformity for light beams of different colors.

In other words, the driving circuits of the first color light-emitting element E1, the second color light-emitting element E2 and the third color light-emitting element E3 are disposed separately. Accordingly, there is no delay time when switching different light-emitting elements between different time periods, and the heat dissipation of each light-emitting element is better. Furthermore, this allows for a reduction in the power of each driving circuit and lowers the cost.

To sum up, the image generating device and the head-up display according to the embodiments of the disclosure have at least one of the following advantages: (1) the liquid crystal display of the image generating device may not have a color filter layer, in which by increasing the transmittance, the optical efficiency of the image generating device is improved, and the absorption rate of sunlight or other external light entering the image generating device is reduced to avoid overheating; (2) the liquid crystal display has a large aperture ratio and high optical efficiency, in which the required output brightness may be achieved with fewer light-emitting elements and the heat dissipation efficiency and service life of the system may be improved; (3) driving circuits may be respectively disposed according to the light-emitting elements of different colors, so that there is no delay time when switching different light-emitting elements between different time periods, and the power required by individual driving circuits is lower, which not only improves the energy efficiency but also reduces the temperature of the light source module.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

## Claims

1. An image generating device of a head-up display, configured to generate an image beam (IL), comprising: at least one light source module (100A), a lighting element (200), and a light modulation module (300); wherein
the at least one light source module (100A) is configured to respectively provide a first color light beam (L1) and a second color light beam (L2) in different time periods;
the lighting element (200) is disposed on a transmission path of the first color light beam (L1) and the second color light beam (L2), and is configured to homogenize the first color light beam (L1) to form a first color illumination beam (LL1), homogenize the second color light beam (L2) to form a second color illumination beam (LL2), and transmit the first color illumination beam (LL1) and the second color illumination beam (LL2) to the light modulation module (300);
the light modulation module (300) is separated from the lighting element (200) by a first separation distance (D1), and comprises a plurality of pixel units (PX) arranged in an array; the pixel units (PX) are configured to receive the first color illumination beam (LL1) and the second color illumination beam (LL2), each of the pixel units (PX) is selectively in an on-state or an off-state, and the pixel units (PX) convert the first color illumination beam (LL1) or the second color illumination beam (LL2) into the image beam (IL).

2. The image generating device according to claim 1, wherein the first color light beam (L1) comprises a plurality of first color sub-light beams, and the second color light beam (L2) comprises a plurality of second color sub-light beams; the lighting element (200) comprises a light incident surface (200A) and a light exit surface (200B) opposite to the light incident surface (200A), and the light incident surface (200A) comprises a plurality of sub-regions (200R);
the image generating device further comprises a plurality of light converging elements (400) disposed between the at least one light source module (100A) and the lighting element (200), wherein the light converging elements (400) receive the first color sub-light beams and the second color sub-light beams from the at least one light source module (100A), each of the first color sub-light beams or each of the second color sub-light beams is transmitted to one of the sub-regions (200R) of the light incident surface (200A) of the lighting element (200) by the light converging elements (400);
wherein the first color sub-light beams are incident from the sub-regions of the light incident surface (200A) and emitted from the light exit surface (200B) to form the first color illumination beam (LL2), the second color sub-light beams are incident from the sub-regions (200R) of the light incident surface (200A) and emitted from the light exit surface (200B) to form the second color illumination beam (LL2);
wherein the light incident surface (200A) of the lighting element (200) are separated from the light converging elements (400) by a second separation distance (D2), and the first separation distance (D1) is defined by the distance between the light exit surface (200B) of the lighting element and the light modulation module (300).

3. The image generating device according to claim 1 or 2, wherein each of the at least one light source module (100A) comprises: a substrate (100S) and a plurality of light-emitting units (101) disposed on the substrate (100S); wherein
the each of the light-emitting units (101) comprises at least one first color light-emitting element (E1) and at least one second color light-emitting element (E2); the at least one first color light-emitting element (E1) of the light-emitting units (101) is configured to provide the first color light beam (L1), the at least one second color light-emitting element (E2) of the light-emitting units (101) is configured to provide the second color light beam (L2).

4. The image generating device according to claim 3, wherein each of the at least one light source module (100A) comprises a plurality of packages, wherein each of the light-emitting units (E1, E2) is disposed in one of the packages, the at least one first color light-emitting element (E1) and the at least one second color light-emitting element (E2) have a fixed position in the package;
wherein the substrate (100S) has an array reference axis (An) parallel to a substrate surface (S1), the packages are arranged on the substrate surface (S1) along the array reference axis (An), and the packages have at least one of a distance periodic variation or a rotation angle periodic variation relative to the array reference axis (An).

5. The image generating device according to any one of the preceding claims, wherein the at least one light source module (100A) comprises:
a first light source module (501) configured to provide the first color light beam (L1) along a first direction;
a second light source module (502) configured to provide the second color light beam (l2) along a second direction, wherein the first direction is different from the second direction;
wherein the image generating device further comprises a light source combining element (505) disposed on the transmission path of the first color light beam (L1) and the second color light beam (L2), configured to transmit the first color light beam (L1) and the second color light beam (L2) to the lighting element (200).

6. The image generating device according to any one of the preceding claims, wherein the at least one light source module (100A) provides the first color light beam (L1) in a first time period, provides the second color light beam (L2) in a second time period, and provides a third color light beam (L3) in a third time period.

7. The image generating device according to claim 6, wherein the at least one light source module (100A) comprises:
a first light source module (501) configured to provide the first color light beam (L1) along a first direction;
a second light source module (502) configured to provide the second color light beam (L2) along a second direction;
a third light source module (503) configured to provide the third color light beam (L3) along the second direction; wherein the first direction is different from the second direction;
the image generating device further comprises a light source combining element (505) disposed on a transmission path of the first color light beam (L1), a transmission path of the second color light beam (L2), and a transmission path of the third color light beam (L3), and is configured to transmit the first color light beam (L1), the second color light beam (L2), and the third color light beam (L3) to the lighting element (200).

8. The image generating device according to any one of the preceding claims, wherein the light modulation module (300) comprises a liquid crystal display, preferably an aperture ratio of each of the pixel units (PX) of the liquid crystal display is greater than or equal to 50% and less than or equal to 80%.

9. The image generating device according to any one of the preceding claims 2-8, wherein the light converging elements (400) comprise at least one of a lens element, a prism, and a light cup.

10. The image generating device according to any one of the preceding claims, wherein the lighting element (200) comprises at least one of an optical film (202) and a lens array element (201).

11. The image generating device according to claim 10, wherein the lighting element (200) is the lens array element (201), comprising a plurality of lens units (LE) arranged in an array, and each of the sub-regions comprises at least two lens units (LE).

12. The image generating device according to any one of the preceding claims, wherein at least two of the first color sub-light beams among the first color sub-light beams (L1) and at least two of the second color sub-light beams among the second color sub-light beams (L2) correspond to one of the light converging elements (400).

13. The image generating device according to any one of the preceding claims, wherein one of the first color sub-light beams among the first color sub-light beams (L1) and one of the second color sub-light beams among the second color sub-light beams (L2) correspond to one of the light converging elements (400).

14. A head-up display, comprising:
the image generating device according to any one of the preceding claims , wherein the image generating device projects the image beam (IL) to a projection surface (40) to form a virtual image.

15. The head-up display according to claim 14, wherein the projection surface (40) is a windshield or a combiner.
